# EUROPÄISCHE PATENTSCHRIFT

(11) **EP 2 132 454 B1**
(45) Veröffentlichungstag und Bekanntmachung des Hinweises auf die Patenterteilung: **21.08.2013**
(21) Anmeldenummer: 08716860.5
(22) Anmeldetag: 15.02.2008
(51) Int. Cl.: F16D 23/14

(54) **VERFAHREN ZUR HERSTELLUNG EINER KUPPLUNGSAUSRÜCKLAGEREINRICHTUNG MIT EINER ANBINDUNGSSTRUKTUR ZUR ANBINDUNG EINES KUPPLUNGSAUSRÜCKLAGERS AN EINE STELLSTANGE**
METHOD OF PRODUCING A CLUTCH RELEASE BEARING DEVICE WITH A STRUCTURE FOR TYING A CLUTCH DISENGAGING BEARING TO AN ADJUSTING ROD
PROCÉDÉ DE FABRICATION D' UN ENSEMBLE DE PALIER DE DÉBRAYAGE AVEC& xA;STRUCTURE D'ATTELAGE POUR ATTELER UNE BUTÉE DE DÉBRAYAGE À UNE TIGE D'AJUSTEMENT

(30) Priorität: 07.03.2007 DE 102007011038
(43) Veröffentlichungstag der Anmeldung: 16.12.2009
(73) Patentinhaber: Schaeffler Technologies AG & Co. KG, 91074 Herzogenaurach (DE)
(72) Erfinder: WINKELMANN, Ludwig, 91056 Erlangen (DE)
(86) Internationale Anmeldenummer: PCT/EP2008/051835
(87) Internationale Veröffentlichungsnummer: WO 2008/107283

(56) Entgegenhaltungen:
- EP-A- 0 953 783
- EP-A- 1 489 327
- EP-A1- 0 533 537
- DE-A1- 19 949 909
- FR-A- 2 872 235
- FR-A- 2 879 701
- GB-A- 2 079 386

## Beschreibung

### Gebiet der Erfindung

Die Erfindung richtet sich auf ein Verfahren zur Herstellung eine Kupplungsausrücklagereinrichtung mit einer Anbindungsstruktur zur Anbindung eines Kupplungsausrücklagers an eine durch ein Schaltgetriebe bereitgestellte, und zur Änderung eines Kupplungseingriffszustands axial verlagerbaren Stellstange.

Derartige Kupplungsausrücklagereinrichtungen sind etwa aus EP 0953783 bekannt und umfassen einen ersten Wälzlagerlaufring, einen zweiten Wälzlagerlaufring und eine Mehrzahl von Wälzkörpern, die zwischen den Laufringen abrollen. Der erste Wälzlagerlaufring, welcher den sogenannten Außenring bildet, ist mit einem Anlaufringabschnitt versehen, an welchem die Membranfedern einer Kupplung anliegen. Der zweite Wälzlagerlaufring, welcher den sogenannten Innenring bildet, steht über einen Tragringabschnitt mit einer Anbindestruktur in körperlichem Kontakt. Bei einfachen Kupplungsausrücklagers ruht die Anbindestruktur axial verschiebbar auf einer Hülse. Um das Kupplungsausrücklager zu betätigen, wirkt eine sogenannte Gabel auf eine Stützschultereinrichtung, die Teil der Anbindestruktur ist, und verschiebt dadurch diese axial auf der Hülse, so daß zum Öffnen der Kupplung der Anlaufabschnitt gegen die Membranfedern gepreßt wird.

Daneben sind Kupplungsausrücklagereinrichtungen etwa aus GB 2079386 bekannt, bei denen die Krafteinleitung nicht von außen über eine auf den äußeren Mantel der Anbindstruktur wirkenden Gabel erfolgt, sondern über eine im Inneren der Anbindestruktur angeordneten und mit dieser verbundenen Stell- bzw. Zugstange.

Eine weitere Kupplungsausrücklagereinrichtung ist z.B. aus FR 2879701 bekannt.

Die Erfindung richtet sich insbesondere auf eine Anbindungsstruktur die auf einen im Endbereich der Stellstange ausgebildeten Gewindezapfenabschnitt aufgeschraubt ist und dazu dient eine auf die Stellstange wirkende Betätigungskraft in einen auf der Anbindungsstruktur unter Belassung eines Radialspiels sitzenden, das Ausrücklager tragenden Ring des Ausrücklagers zu übertragen.

Mittels einer Stellstange betätigte Kupplungsausrücklager der vorgenannten Art finden insbesondere bei Doppelkupplungsgetrieben Anwendung, wobei die Stellstange in eine als Hohlwelle ausgeführte Getriebewelle eingesetzt ist und in dieser axial verlagerbar ist. Bei derartigen Doppelkupplungsgetrieben steht für die Befestigung des Kupplungsausrücklagers an der Stellstange typischerweise nur wenig Bauraum zur Verfügung.

Der Erfindung liegt die Aufgabe zugrunde, Lösungen zu schaffen durch welche mit hoher Prozesssicherheit eine mechanisch korrekte Anbindung des Kupplungsausrücklagers an der Stellstange in kostengünstiger Weise erreicht werden kann.

Diese Aufgabe wird erfindungsgemäß gelöst durch ein in Anspruch 1 definiertes Verfahren zur Herstellung einer Kupplungsausrücklagereinrichtung wobei eine Anbindungsstruktur zur Anbindung des Tragringabschnitts eines Kupplungsausrücklagers an eine Stellstange die der axialen Verlagerung des Kupplungsausrücklagers und damit der Änderung eines Kupplungseingriffszustands dient, mit:
- einem einen Teil der Anbindestruktur bildenen Ringkorpus, der einen Zylinderzapfenabschnitt, eine radial über den Zylinderzapfenabschnitt hervorkragende Stützschultereinrichtung und eine zu einem Gewindezapfenabschnitt einer Zustange komplementäre Innenbohrung aufweist, wobei über die Anbindestruktur eine Axialkraft in den Tragringabschnitt einleitbar ist,
- wobei der Zylinderzapfenabschnitt hinsichtlich seines Außendurchmessers derart gestaltet ist, dass dieser den Tragringabschnitt unter Belassung eines Radialspiels axial durchsetzt, und
- die Stützschultereinrichtung eine dem Tragringabschnitt zugewandte Stirnfläche bildet, und
- eine Tellerfedereinrichtung vorgesehen ist, durch welche der Tragringabschnitt gegen die Stirnfläche der Stützschultereinrichtung gedrängt wird,
- wobei im Bereich eines der Stützschultereinrichtung abgewandten Endbereiches des Zylinderzapfenabschnitts eine Ringschultereinrichtung ausgebildet ist welche den Innenumfangskantenbereich der Tellerfedereinrichtung in axialer Richtung abstützt,
- wobei im Bereich eines der Stützschultereinrichtung abgewandten Endabschnittes des Zylinderzapfenabschnitts eine Ringschultereinrichtung ausgebildet ist, welche den Innenumfangskantenbereich der Tellerfedereinrichtung in gespanntem Zustand in axialer Richtung abstützt, und die Ringschultereinrichtung durch plastische Umformung eines Endbereiches des Zylinderzapfenabschnitts gefertigt ist, wobei die Aufweitung der zur Bildung der Ringschultereinrichtung vorgesehenen Endbereichs des Zylinderzapfenabschnitts nach Aufsetzen des Tragringabschnitts und der Tellerfeder erfolgt, zur Schaffung einer insoweit vormontierten Baugruppe.

Dadurch wird es auf vorteilhafte Weise möglich, das Kupplungsausrücklager und die Anbindungsstruktur zu einer Einbaueinheit zusammenzufassen und eine zuverlässige und geometrisch korrekte Fixierung des Kupplungsausrücklagers an der Stellstange zu erreichen und hierbei insbesondere auch bei weitgehender Ausschöpfung des Anzugsmomentes der Gewindeverbindung unzulässige Änderungen der Axialvorspannung der den Tragringabschnitt an die zur Einleitung der Axialkraft vorgesehene Ringschulter drängenden Tellerfeder zu verhindern.

Vorteilhafte Ausgestaltungen dieses Verfahrens sind Gegenstand der Unteransprüche.

Diese Kupplungsausrücklagereinrichtung kann als unmittelbar auf eine Stellstange aufschraubbare und damit insbesondere bereits hinsichtlich der Einbindung der axial vorgespannten Tellerfeder vormontierte Baugruppe in vorteilhafter Weise im Rahmen eines automatisierten Fertigungsprozesses auf die zugeordnete Stellstange aufgeschraubt bzw. auf dieser fixiert werden.

Weitere Einzelheiten und Merkmale der Erfindung ergeben sich aus der nachfolgenden Beschreibung in Verbindung mit der Zeichnung. Es zeigt:
- **Figur 1**: eine Schemadarstellung zur Veranschaulichung der Einbausituation eines durch eine erfindungsgemäße Anbindungsstruktur in ein Doppelkupplungsgetriebe eingebundenen Kupplungsausrücklagers,
- **Figur 2**: eine Axial-Schnittdarstellung zur Veranschaulichung konstruktiver Einzelheiten der erfindungsgemäßen Anbindungsstruktur,
- **Figur 3a**: eine weitere Axial-Schnittansicht zur Veranschaulichung einer weiteren Variante einer erfindungsgemäßen Anbindungsstruktur,
- **Figur 3b**: eine Detail-Darstellung zur Veranschaulichung des Aufbaus einer durch plastische Umformung realisierten Verdrehsicherung,
- **Figur 3c**: eine weitere Detail-Darstellung zur Veranschaulichung einer weiteren Variante einer Verdrehsicherung,
- **Figur 4a**: eine Axial-Schnittansicht zur Veranschaulichung einer weiteren Variante einer erfindungsgemäßen Anbindungsstruktur mit einer im Querschnitt sechseckigen Stützschultereinrichtung und einem daran angesetzten Scheibenelement,
- **Figur 4b**: eine Draufsicht auf die Anbindungsstruktur nach Figur 4a;
- **Figur 5**: zeigt eine Variante einer nicht erfindungsgemäß, unter Einbindung einer Anbindungsstruktur und der Tellerfeder zu einer Einbaueinheit vormontierten Kupplungsausrücklagereinrichtung;
- **Figur 6**: zeigt eine Variante einer nicht erfindungsgemäß unter Einbindung einer Anbindungsstruktur und der Tellerfeder zu einer Einbaueinheit vormontierten Kupplungsausrücklagereinrichtung, mit einer Doppelkonusstruktur;

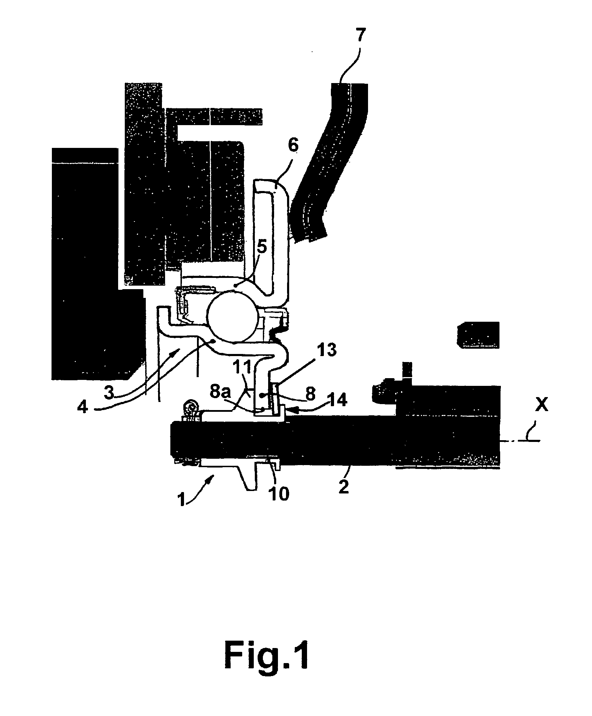

Figur 1 veranschaulicht die Einbausituation eines durch eine erfindungsgemäße Anbindungsstruktur 1 an eine Zugstange 2 angebundenen Kupplungsausrücklagers 3.

Das Kupplungsausrücklager 3 umfasst einen Wälzlagerinnenring 4 und einen Wälz-lageraußenring 5. Der Wälzlageraußenring 5 ist als Tiefzieh-Umformteil gefertigt und bildet einen Anlaufringabschnitt 6, der als solcher an den Kupplungslamellen 7 einer hier ansonsten nicht weiter dargestellten Kupplungseinrichtung anliegt.

Der Wälzlagerinnenring 4 ist mit einem Tragringabschnitt 8 versehen und über diesen Tragringabschnitt 8 an der erfindungsgemäßen Anbindungsstruktur 1 und damit an der Zugstange 2 axial gesichert. Durch die axiale Verlagerung der Zugstange 2 wird es möglich, über die Anbindungsstruktur 1 eine Axialkraft in den Tragringabschnitt 8 einzuleiten und hierdurch das gesamte Kupplungsausrücklager 3 in axialer Richtung zu verschieben und die Kupplungslamellen 7 entsprechend zu betätigen.

Die hier dargestellte Anbindungsstruktur 1 dient als solche der Anbindung des Tragringabschnitts 8 des Kupplungsausrücklagers 3 an die Zugstange 2. Die Zugstange 2 ist mit einem Außengewindeabschnitt versehen.

Die Anbindungsstruktur 1 umfasst einen Ringkorpus, der einen Zylinderzapfenabschnitt 10, eine radial über den Zylinderzapfenabschnitt 10 hervorkragende Stützschultereinrichtung 11 und eine zu dem Außengewindeabschnitt der Zugstange 2 hinsichtlich des Gewindes komplementäre Innengewindebohrung aufweist.

Der Zylinderzapfenabschnitt 10 ist hinsichtlich seines Außendurchmessers derart gestaltet, dass dieser eine Innenbohrung 8a des Tragringabschnitts 8 unter Belassung eines Radialspiels axial durchsetzt. Dieses Radialspiel ist derart bemessen, dass das Kupplungsausrücklager 3 gegenüber der Zentralachse X in einem Ausmaß verlagerbar ist, das ausreicht, um einen Radialversatz der Umlaufachse der Kupplungslamellen 7 gegenüber der Zentralachse X der Zugstange 2 zumindest teilweise zu kompensieren.

Die Stützschultereinrichtung 11 bildet eine dem Tragringabschnitt 8 zugewandte Stirnfläche, die als solche der Einleitung der durch die Zugstange 2 aufgebrachten Axialkräfte in den Tragringabschnitt 8 dient. Der Tragringabschnitt 8 ist auf einer der Stützschultereinrichtung 11 abgewandten Seite mit einer Tellerfedereinrichtung 13 belastet. Diese Tellerfedereinrichtung 13 ist dabei derart vorgespannt, dass diese den Tragringabschnitt 8 gegen die Stirnfläche der Stützschultereinrichtung 11 drängt.

Die erfindungsgemäße Anbindungsstruktur zeichnet sich insbesondere dadurch aus, dass im Bereich eines der Stützschultereinrichtung 11 abgewandten Endabschnittes des Zylinderzapfenabschnitts 10 eine Ringschultereinrichtung 14 ausgebildet ist, welche den Innenumfangskantenbereich der Tellerfedereinrichtung 13 in axialer Richtung abstützt.

Bei dem hier gezeigten Ausführungsbeispiel ist die Ringschultereinrichtung 14 als integraler Bestandteil des Ringkorpus' ausgeführt. Die Ringschultereinrichtung 14 ist hierbei insbesondere durch plastische Umformung, insbesondere Aufbördelung, Aufstauchung, oder anderweitige Aufweitung des entsprechenden Endbereiches des Zylinderzapfenabschnittes 10 gefertigt. Die Aufweitung des zur Bildung der Ringschultereinrichtung 14 vorgesehenen Endbereichs des Zylinderzapfenabschnittes 11 erfolgt erst nach Aufsetzen des Tragringabschnitts 8 und der Tellerfedereinrichtung 13 auf den Zylinderzapfenabschnitt 10.

Es ist möglich, an dem Zylinderzapfenabschnitt 10 entsprechende Einstiche sowie verjüngte Bereiche auszubilden, die eine besonders vorteilhafte Umformung des zunächst zylindrischen Endabschnitts des Zylinderzapfenabschnitts 10 zu der erfindungsgemäßen, radial auskragenden Ringschultereinrichtung 14 unterstützen. Die Umformung kann durch Aufpressen eines Matrizenstempels, oder auch in mehreren Schritten durch entsprechende Umformstempel bewerkstelligt werden.

Durch die erfindungsgemäße Anbindungsstruktur wird neben einem, unmittelbar auf die Zugstange 2 aufschraubbaren Gewindezapfenabschnitt, eine Rinnenstruktur geschaffen, in welcher der Tragringabschnitt 8 der Kupplungsausrücklagereinrichtung 3 mit einer, in einem engen Toleranzbereich prozesssicher einhaltbaren, axialen Vorspannung der Tellerfedereinrichtung 13 gespannt ist. Dieser Spannungszustand erfolgt in einem der Montage der Kupplungsausrücklagereinrichtung 3 auf der Zugstange 2 vorangehenden Vormontageschritt, in welchem die Kupplungsausrücklagereinrichtung 3 mit der erfindungsgemäßen Anbindungsstruktur bestückt und unter Aufweitung der Ringschultereinrichtung 14 zu einer Unterbaugruppe vormontiert wird.

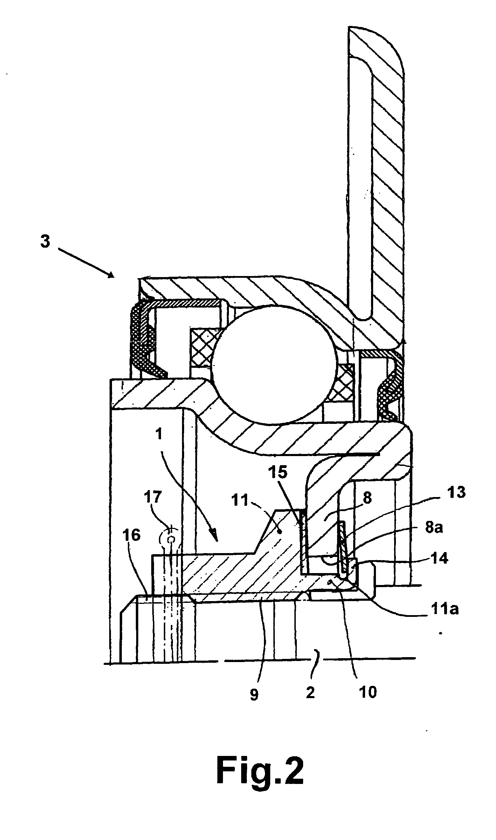

In Figur 2 ist in Form einer Detaildarstellung eine Kupplungsausrücklagereinrichtung 3 für ein Doppelkupplungsschaltgetriebe dargestellt, das hinsichtlich seines Aufbaus im wesentlichen dem Kupplungsausrücklager gemäß der vorangehend erläuterten Figur 1 entspricht. Die Ausführungen zu Figur 1 gelten insoweit sinngemäß.

Bei dem Ausführungsbeispiel gemäß Figur 2 ist zwischen die durch die Stützschultereinrichtung 11 gebildete Stirnwand und den Tragringabschnitt 8 eine aus einem wärmebehandelten Stahlmaterial, oder einem Gleitlagerwerkstoff gefertigte Anlaufscheibe 15 eingefügt. Der Tragringabschnitt 8 wird auch bei diesem Ausführungsbeispiel durch die Tellerfedereinrichtung 13 in axialer Richtung gegen die Anlaufscheibe 15 bzw. die Stützschultereinrichtung 11 gespannt. Die Tellerfedereinrichtung 13 stützt sich hierbei, wie bei dem Ausführungsbeispiel nach Figur 1, an einer Ringschultereinrichtung 14 ab, die durch plastische Umformung eines Endabschnittes des die Innenöffnung 8a des Tragringabschnitts 8 durchsetzenden Zylinderzapfenabschnitts 10 gefertigt ist.

Die Ringschultereinrichtung 14 besteht hierbei aus einem umgeformten Materialabschnitt des Zylinderzapfenabschnitts 10 dessen Wanddicke gegenüber der Wanddicke des Zylinderzapfenabschnitts 10 im Bereich der Innenbohrung 8a etwas geringer ist. Hierdurch wird die radiale Ausklappung und plastische Umformung dieses Abschnittes erleichtert. Durch die Ausbildung einer hier erkennbaren Einstichstelle 11a wird es möglich, die Axialposition der Ausklapp-Fußzone der Ringschultereinrichtung 14 in einem engen Toleranzbereich festzulegen.

Bei dem hier gezeigten Ausführungsbeispiel bildet die Anbindungsstruktur ein Gewindebuchsenelement, das als solches einen den Tragringabschnitt 8 lagernden Zylinderzapfenabschnitt 10 sowie eine den Tragringabschnitt 8 gegen die Stützschultereinrichtung 11 drängende Ringschultereinrichtung 14 umfasst. Dieses Gewindebuchsenelement kann über die hier erkennbare Gewindestruktur 9 auf einen komplementär hierzu ausgebildeten Außengewindeabschnitt der Zugstange 2 aufgeschraubt werden.

Bei dem hier dargestellten Ausführungsbeispiel ist zur Realisierung einer Drehsicherung ein Splint 17 vorgesehen, durch welchen eine Relativdrehung der Anbindungsstruktur 1 (z.B. durch einen Kronenmutterrand) gegenüber der Zugstange 2 verhindert ist.

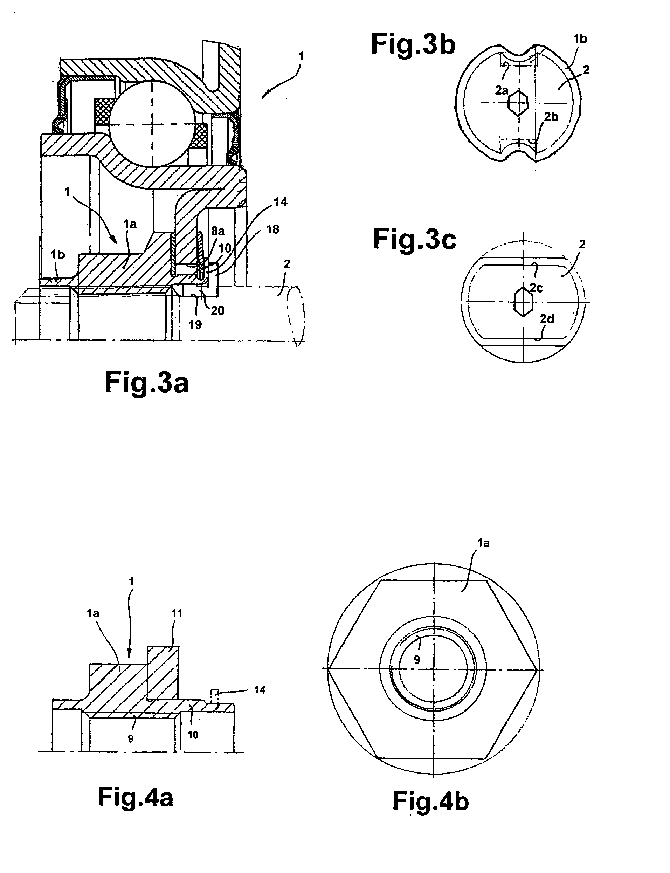

Figur 3a zeigt ebenfalls in Form einer Axial-Schnittdarstellung eine weitere Variante einer erfindungsgemäßen Anbindungsstruktur 1, die als solche der Anbindung einer Kupplungsausrücklagereinrichtung 1 an eine Zugstange 2 eines Doppelkupplungsschaltgetriebes dient. Die Anbindungsstruktur 1 umfasst einen Ringkorpus, der insbesondere in dem hier erkennbaren Mittenbereich 1 a als Sechskant- oder insbesondere Außen-Torxmutter ausgeführt sein kann. Die Verdrehsicherung der derart gestalteten Anbindungsstruktur 1 gegenüber der Zugstange 2 kann durch einen plastisch verformbaren Ringrandabschnitt 1b bewerkstelligt werden. Dieser Ringrandabschnitt 1b kann, wie aus Figur 3b ersichtlich, lokal in entsprechende Axialnuten 2a, 2b der Zugstange 2 eingepresst werden und hierbei eine formschlüssige Verdrehsicherung der Anbindungsstruktur gegenüber der Zugstange 2 bewirken.

Alternativ zu der Ausgestaltung von Axialnuten 2a, 2b in der Zugstange 2 ist es auch möglich, wie in Figur 3c dargestellt, die Zugstange in ihrem, den Ringrandabschnitt 1b durchsetzenden Endbereich lokal mit Abflachungen 2c, 2d zu versehen, auf welche der Ringrandabschnitt 1 b unter Bildung der hier erkennbaren Struktur aufgequetscht werden kann. Zur Abstützung des Reibmomentes beim Aufschrauben der Anbindungsstruktur ist vorzugsweise das Ende der Zugstange mit einem Innensechskant versehen.

Die erfindungsgemäße Anbindungsstruktur 1 kann gegen eine an der Zugstange 2 axial festgelegte, hier durch eine Stützscheibe 18, gebildete Schulter gespannt werden. Anstelle der hier dargestellten, als Aufspannschulter wirkenden Stützscheibe 18 ist es auch möglich, anderweitige, eine Anschraubstirnfläche bereitstellende Strukturen, gegebenenfalls integral mit der Zugstange 2 ausgeführte Ringschultern vorzusehen.

Bei dem hier gezeigten Ausführungsbeispiel ist die Stützscheibe 18 so gestaltet, dass diese in einer an der Zugstange 2 ausgebildeten Ringnut 19 sitzt. Die Stützscheibe 18 umfasst einen Ringabschnitt 20, der als solcher den, die Innenbohrung 8a untergreifenden Zylinderzapfenabschnitt 10 ebenfalls untergreift. Hierdurch wird es möglich, die Stützscheibe 18 als zweiteiliges, oder geschlitztes und unter radialer Weitung über den Gewindeabschnitt der Zugstange 2 überschiebbares Bauteil auszuführen, das bei Erreichen der Ringnut 19 in diese einschnappt und in dem hier gezeigten Montagezustand zudem unmittelbar durch den Zylinderzapfenabschnitt 10 in radialer Richtung gegen Herausfallen aus der Ringnut 19 gesichert ist.

Die Stützscheibe 18 ist vorzugsweise derart dimensioniert, dass durch diese eine zusätzliche Sicherung und Abstützung der Ringschultereinrichtung 14 der Anbindungsstruktur 1 erreicht wird.

In Figur 4a ist ein zur Bildung einer erfindungsgemäßen Anbindungsstruktur 1 vorgesehner Ringkorpus in einem Zustand dargestellt, in welchem dessen hinsichtlich seiner Wanddicke verjüngt ausgebildeter Axialendbereich des Zylinderzapfenabschnitts 10 noch nicht zu der, hier in Strichlinien angedeuteten Ringschultereinrichtung 14, aufgeweitet, insbesondere aufgebördelt ist. Bei dem hier gezeigten Ausführungsbeispiel bildet der Mittenbereich 1 a des Ringkorpus' 1 eine Vielkant-, insbesondere Sechskantstruktur, die als solche das Aufschrauben der erfindungsgemäßen Anbindungsstruktur 1 auf den Gewindeabschnitt einer zugeordneten Zugstange eines Doppelkupplungsgetriebes erleichtert. Abweichend von den vorangehend beschriebenen Ausführungsbeispielen, wird bei der hier gezeigten Ausführungsform, die Stützschultereinrichtung 11 durch eine Ringscheibe gebildet, die auf einen den Innengewindeabschnitt 9 umgreifenden Wandungsabschnitt des Zylinderzapfenabschnitts 10 aufgepresst ist. Die derart ausgeführte Anbindungsstruktur 1 kann in einer, unter fertigungstechnischen Gesichtspunkten besonders vorteilhaften Weise, aus einem blankgezogenen, durch Wärmebehandlung vergütetem (vorzugsweise mind. 400HV) Sechskant-Halbzeug spanabhebend herausgearbeitet werden.

In Figur 4b ist in Form einer Draufsicht die Gestaltung der erfindungsgemäßen Anbindungsstruktur 1, insbesondere hinsichtlich des Querschnitts des Mittenbereichs 1 a dargestellt.

Alternativ zu der torsionsfesten Verankerung der Anbindungsstruktur 1 an der Zugstange 2 durch die vorangehend beschriebenen Sicherungsmittel, insbesondere Splinte oder durch plastisches Umformen der Anbindungsstruktur ist es auch möglich, eine Verdrehsicherung unter Verwendung anderweitiger Hilfsmittel, insbesondere von Kappenelementen zu bewerkstelligen, die auf den Mittenbereich 1a der Anbindungsstruktur 1 als Glockenstrukturen aufgesteckt werden und mit einem anderen Abschnitt, insbesondere einem Sechskant-Einsteckabschnitt mit einer stirnseitig in der Zugstange 2 ausgebildeten Sechskant-Einstecköffnung in Eingriff bringbar sind.

Durch die erfindungsgemäße Anbindungsstruktur wird eine prozesssichere Montage eines Ausrücklagers am Zugstab erreicht. Die erfindungsgemäße Anbindungsstruktur kann selbstzentrierend auf die Zugstange 2 aufgeschraubt werden. Der Innenring des Ausrücklagers, sowie die für die innere Vorspannung erforderliche Vorspannfeder wird über den als Bördelring fungierenden Ringschulterabschnitt gemeinsam mit der Anbindungsstruktur zu einer Baueinheit zusammengefasst. Die axiale Abstützung der Betätigungskräfte erfolgt über den Innenringflansch und den einstückig am Bördelring angeformten, radial verlaufenden Flansch. Dieser wird wiederum beispielhaft über eine Kronenmutter axial fixiert und abgestützt. Die axiale Fixierung erfolgt durch die Anstellung des Bördelringes gegen den Zentrierstab-Bund. Die Verdrehsicherung der Kronenmutter kann z.B. über den hier dargestellten Splint erfolgen.

In weiterer Ausgestaltung ist es möglich, die Selbstzentriereinrichtung einstückig an die modifizierte Kronenmutter anzuformen, d.h. ein axial angeformter Bund dient als Träger, wobei der Endbereich derart gestaltet ist, dass nach Komplettieren mit dem Innenring und der Vorspannfeder dieser Endbereich zur Fixierung umgebördelt wird und damit die innere Vorspannung sicherstellt. Die axiale Positionierung wird durch den Einstich 24 für den Gewindeauslauf an dem Zugstab erreicht, sodass ein Sprengring in die Nut eingesetzt werden kann und dieser als axialer Anschlag fungiert. Die axiale Abstützung des Innenrings wird durch den einstückig an die Kronenmutter angeformten, radial verlaufenden Flansch ermöglicht. Eine wärmebehandelte, vorzugsweise vergütete Scheibe sorgt für gleichmäßige, radiale Verschiebekräfte und verringert den Verschleiß an der Kontaktstelle.

Statt stirnseitiger Kronenkontur kann auch ein axial verlaufender Bund an die, die Anbindungseinrichtung bildende Sondermutter angeformt sein. Nach Verschrauben der Sondermutter gegen den axialen Anschlag am Zugstab wird mittels eines Werkzeuges der Bund radial plastisch umgeformt, sodass dieser in die Längsnuten eingeformt oder gegen eine Schlüsselfläche formschlüssig angepresst wird.

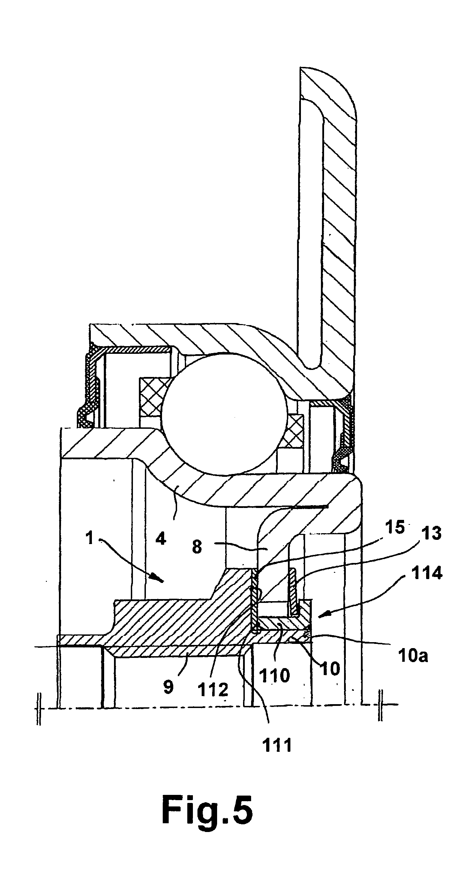

In Figur 5 ist eine Ausführungsform einer nicht erfindungsgemäßen Kupplungsausrücklagereinrichtung dargestellt. Auch bei diesem Ausführungsbeispiel ist der Wälzlagerinnenring 4 mit einem Tragringabschnitt 8 versehen und über diesen Tragringabschnitt 8 an der erfindungsgemäßen Anbindungsstruktur 1 und damit an der hier nicht näher dargestellten Zugstange 2 axial gesichert.

Die Anbindungsstruktur 1 umfasst einen Ringkorpus, der einen Zylinderzapfenabschnitt 10, eine radial über den Zylinderzapfenabschnitt 10 hervorkragende Stützschultereinrichtung 11 und eine zu dem Außengewindeabschnitt der Zugstange 2 hinsichtlich des Gewindes komplementäre Innengewindebohrung 9 aufweist.

Der Zylinderzapfenabschnitt 10 ist hinsichtlich seines Außendurchmessers derart gestaltet, dass auf diesen ein Winkelringelement 114 aufsetzbar, insbesondere aufpressbar ist. Das Winkelringelement 114 ist so gestaltet, dass dieses die Ringschulter 14 sowie einen die Innenbohrung 8a des Tragringabschnitts 8 unter Belassung eines Radialspiels axial durchsetzenden Ringzapfenabschnitt 110 umfasst.

Der Ringzapfenabschnitt 110 bildet eine Stirnfläche 111. Zwischen dieser Stirnfläche 111 des Ringzapfenabschnitts 110 und einer durch den Ringkorpus bereitgestellten Stirnfläche 112 ist eine Anlaufscheibe 15 axial gesichert.

Durch das in Figur 5 gezeigte Konzept zur axialen Abstützung der Tellerfeder 13 wird es wie bei den vorangehend beschriebenen Ausführungsbeispielen möglich, die Ausrücklagereinrichtung 1, die Tellerfeder 13 und die Anbindungsstruktur zu einer hinsichtlich der Vorspannung der Tellerfeder vormontierten und endkalibrierten Baugruppe zusammenzufassen.

Die Fixierung des Winkelringelementes 114 kann durch entsprechende Gestaltung der Passung des Winkelringelementes 114 auf dem Ringzapfenabschnitt 10 erfolgen. Weiterhin ist es erfindungsgemäβ auch möglich, den Stirnbereich 10 des Ringzapfenabschnitts 10 derart zu verstemmen (nicht gezeigt), dass durch diesen das Winkelringelement 114 axial gesichert ist. Es ist auch möglich, das Winkelringelement 114 durch eine kleine Kehlnaht an dem Ringzapfenabschnitt 10 anzuschweißen.

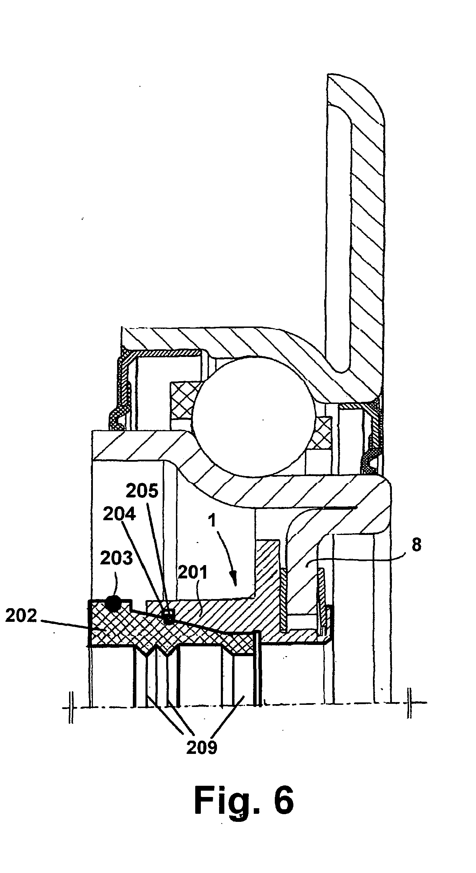

In Figur 6 ist eine Variante einer nicht erfindungsgemäßen Kupplungsausrücklagereinrichtung dargestellt. Für dieses Ausführungsbeispiel gelten insbesondere hinsichtlich der Anbindung des Tragringabschnitts 8 an die Anbindungsstruktur 1 die Ausführungen zu den Varianten gemäß Figuren 2 und 3a sinngemäß.

Abweichend von der Variante nach Figur 2 bildet bei diesem Ausführungsbeispiel der Ringkorpus einen Innenkonusabschnitt 201 in welchen eine ggf. axial geteilte, oder radial auffederbare Außenkonusbuchse 202 einsetzbar ist. Diese Außenkonusbuchse 202 ist mit einem Innenprofil 209 versehen das mit einer komplementär hierzu am Außenumfang der zugeordneten Stellstange 2 (vgl. Fig.1) ausgebildeten Profilierung in Eingriff bringbar ist. Der Formschluss der Fixierung wird dabei z. B. über das umlaufende Rillenprofil 209 an der Fixierringstruktur und am Ende der Zugstange 2 erreicht. Ähnlich der Befestigung bei Motorventilen wird hier die Fixierstruktur als axial geteilter Ring vorgeschlagen, welcher zuerst in die Rillenkontur der Zugstange verrastet wird und über die kegelige Mantelform des Innenbuchsenabschnitts 201 radial gesichert und damit an der Zugstange axial unverrückbar fixiert ist. Vorzugsweise sind weitere Sicherungsstrukturen vorgesehen, durch welche der Sitz der Außenkonusbuchse 202 auf der Stellstange 2 zusätzlich gesichert werden kann. Wie aus dieser Darstellung ersichtlich können diese Sicherungsstrukturen als Federring 203 ausgeführt sein, der in einer entsprechenden Umfangsnut sitz und dabei die Halbschalen der Außenkonusbuchse 202 zusammenhält. Alternativ zu dieser Sicherungstechnik ist es auch möglich, wie hier dargestellt zwischen der Außenkonusbuchse 202 und dem Ringkorpus eine Sicherungsstruktur zu realisieren die als solche diese beiden Komponenten in Fügestellung sichert. Beim vorliegenden Ausführungsbeispiel ist hierzu eine erste Federringnut in der Außenkonusbuchse 202 ausgeführt in welche ein Federring 205 "halbtief" einsinken kann und dabei die Außenkonusbuchse 202 an der Innenwandung einer den Federing 205 aufnehmenden Innennut 204 abstützt. Die Innennut 204 is derart bemessen, dass deren Breite im wesentlichen der Breite des Federrings entspricht. Die Radialtiefe der Innennut 204 ist so gestaltet, dass der Feddering 205 hinreichend weit radial auffedern kann.

Die Fixierstruktur kann als axial gesprengter Ring oder als Fließpressteil hergestellt werden. Ferner ist es möglich, die Fixierstruktur als hochfestes Kunststoff- oder Duroplast-Spritzteil herzustellen. Hilfreich bei der Montage ist auch eine federelastische Verbindung oder ein Filmscharnier.

Abhängig von der Rillenteilung kann die Anbindungsstruktur für die verschiedene Kupplungen in entsprechende axialen Position auf der Zugstange fixiert werden.

## Patentansprüche

1. Verfahren zur Herstellung einer Kupplungsausrücklagereinrichtung mit:
- einem Kupplungsausrücklager (3) das einen ersten Wälzlagerlaufring (4), einen zweiten Wälzlagerlaufring (5), einen Tragringabschnitt (8) an einem der Wälzlagerlaufringe (4, 5) und eine Anbindungsstruktur (1) aufweist,
wobei die Anbindungsstruktur (1) einen Ringkorpus umfasst, der einen Zylinderzapfenabschnitt (10), eine radial über den Zylinderzapfenabschnitt (10) hervorragende Stützschultereinrichtung (11) und eine zu einem Gewindezapfenabschnitt (15) einer Zugstange (2) komplementäre Innengewindebohrung (9) aufweist,
wobei die Anbindungsstruktur (1) in den Tragringabschnitt (8) eingesetzt ist, wobei über die Anbindungsstruktur eine Axialkraft in den Tragringabschnitt (8) zur axialen Verschiebung des Kupplungsausrücklagers (3) einleitbar ist,
- wobei der Zylinderzapfenabschnitt (10) hinsichtlich seines Außendurchmessers derart gestaltet ist, dass dieser den Tragringabschnitt (8) unter Belassung eines Radialspiels axial durchsetzt, und
- die Stützschultereinrichtung (11) eine dem Tragringabschnitt (8) zugewandte Stirnfläche bildet, und
- eine Tellerfedereinrichtung (13) vorgesehen ist, welche den Tragringabschnitt (8) gegen die Stirnfläche der Stützschultereinrichtung (11) drängt,
- wobei im Bereich eines der Stützschultereinrichtung (11) abgewandten Endabschnittes des Zylinderzapfenabschnitts (10) eine Ringschultereinrichtung (14) ausgebildet ist welche den Innenumfangskantenbereich der Tellerfedereinrichtung (13) in gespanntem Zustand in axialer Richtung abstützt, **dadurch gekennzeichnet, dass** die Ringschultereinrichtung (14) durch plastische Umformung eines Endbereiches des Zylinderzapfenabschnitts (10) gefertigt ist, wobei die Aufweitung der zur Bildung der Ringschultereinrichtung (14) vorgesehenen Endbereichs des Zylinderzapfenabschnitts (10) nach Aufsetzen des Tragringabschnitts (8) und der Tellerfeder (13) erfolgt, zur Schaffung einer insoweit vormontierten Baugruppe.

2. Verfahren zur Herstellung einer Kupplungsausrücklagereinrichtung nach Anspruch 1, **dadurch gekennzeichnet, dass** die Ringschultereinrichtung (14) integral mit dem Ringkorpus ausgeführt ist.

3. Verfahren zur Herstellung einer Kupplungsausrücklagereinrichtung nach wenigstens einem der Ansprüche 1 bis 2, **dadurch gekennzeichnet, dass** in einem zwischen der Stützschultereinrichtung (11) und dem Tragringabschnitt (8) liegenden Bereich eine Anlagescheibe eingefügt ist.

4. Verfahren zur Herstellung einer Kupplungsausrücklagereinrichtung nach wenigstens einem der Ansprüche 1 bis 3, **dadurch gekennzeichnet, dass** eine Sicherungseinrichtung vorgesehen ist, zur drehfesten Verankerung der Anbindungsstruktur (1) auf der Zugstange (2).

5. Verfahren zur Herstellung einer Kupplungsausrücklagereinrichtung nach Anspruch 4, **dadurch gekennzeichnet, dass** diese mit einem plastisch verformbaren Abschnitt versehen ist der in einen Mitnehmerbereich der Zugstange (2) unter plastischer Verformung einpressbar ist.

6. Verfahren zur Herstellung einer Kupplungsausrücklagereinrichtung nach Anspruch 4, **dadurch gekennzeichnet, dass** diese in ihrem der Ringschultereinrichtung abgewandten Axialendbereich mit einem Poly-Stop Kunststoffsicherungsring versehen ist.

7. Verfahren zur Herstellung einer Kupplungsausrücklagereinrichtung nach Anspruch 4, **dadurch gekennzeichnet, dass** ein Kappenelement vorgesehen ist das auf die Anbindungsstruktur aufsetzbar ist und mit einem Mitnehmerabschnitt der Zugstange (2) in Eingriff bringbar ist.

8. Verfahren zur Herstellung einer Kupplungsausrücklagereinrichtung nach Anspruch 7, **dadurch gekennzeichnet, dass** der Mitnehmerabschnitt der Zugstange durch eine im Querschnitt unrunde, insbesondere sechseckige, oder Torx-profilierte und in die Stirnseite der Zugstange (2) eintauchende Sacklochbohrung gefertigt ist, und dass das Kappenelement einen Einsatzzapfen mit einem zum Querschnitt der Sacklochbohrung komplementären Zapfenquerschnitt aufweist.

9. Verfahren zur Herstellung einer Kupplungsausrücklagereinrichtung nach Anspruch 7, **dadurch gekennzeichnet, dass** der Mitnehmerabschnitt der Zugstange als Einfach- oder Mehrfachschlitzung des Zugstangenendes ausgeführt ist und dass das Kappenelement einen Einsatzzapfen mit einem zum Querschnitt der Schlitzgeometrie komplementären Zapfenquerschnitt aufweist.

10. Verfahren zur Herstellung einer Kupplungsausrücklagereinrichtung nach Anspruch 1, **dadurch gekennzeichnet, dass** die Anbindungsstruktur (1) formschlüssig an der Zugstange (2) axial gesichert ist.

11. Verfahren zur Herstellung einer Kupplungsausrücklagereinrichtung nach Anspruch 1, **dadurch gekennzeichnet, dass** im Bereich eines der Stützschultereinrichtung (11) abgewandten Endabschnittes des Zylinderzapfenabschnitts (10) eine, eine Ringschulter bildende Struktur vorgesehen ist, die an dem Zylinderzapfenabschnitt (10) gesichert ist und den Innenumfangskantenbereich der Tellerfedereinrichtung (13) in gespanntem Zustand in axialer Richtung abstützt und das Kupplungsausrücklager (3) die Tellerfedereinrichtung (13) und die Anbindungsstruktur (1) zu einer vormontierten Baueinheit zusammenfasst.

## Claims

1. Method for producing a clutch-release bearing device having:
- a clutch-release bearing (3) which has a first anti-friction bearing raceway (4), a second anti-friction bearing raceway (5), a carrying-ring section (8) on one of the anti-friction bearing raceways (4, 5), and an attaching structure (1),
the attaching structure (1) comprising an annular body which has a cylindrical journal section (10), a supporting-shoulder device (11) which protrudes radially beyond the cylindrical journal section (10), and an internally threaded bore (9) which is complementary with respect to a threaded journal section (15) of a tie rod (2),
the attaching structure (1) being inserted into the carrying-ring section (8),
it being possible for an axial force to be introduced via the attaching structure into the carrying-ring section (8) for the axial displacement of the clutch-release bearing (3),
- the external diameter of the cylindrical journal section (10) being designed in such a way that the said cylindrical journal section (10) penetrates the carrying-ring section (8) axially, leaving a radial play, and
- the supporting-shoulder device (11) forming an end face which faces the carrying-ring section (8), and
- a disc-spring device (13) being provided which pushes the carrying-ring section (8) against the end face of the supporting-shoulder device (11),
- an annular-shoulder device (14) being formed in the region of an end section, facing away from the supporting-shoulder device (11), of the cylindrical journal section (10), which annular-shoulder device (14) supports the inner circumferential-edge region of the disc-spring device (13) in the axial direction in the stressed state, **characterized in that** the annular-shoulder device (14) is produced by plastic deformation of one end region of the cylindrical journal section (10), that end region of the cylindrical journal section (10) which is provided to form the annular-shoulder device (14) being widened after fitting of the carrying-ring section (8) and the disc spring (13), in order to produce a module which is preassembled to this extent.

2. Method for producing a clutch-release bearing device according to Claim 1, **characterized in that** the annular-shoulder device (14) is configured integrally with the annular body.

3. Method for producing a clutch-release bearing device according at least to either of Claims 1 and 2, **characterized in that** a bearing disc is inserted in a region which lies between the supporting-shoulder device (11) and the carrying-ring section (8).

4. Method for producing a clutch-release bearing device according to at least one of Claims 1 to 3, **characterized in that** a securing device is provided, for the rotationally fixed anchoring of the attaching structure (1) on the tie rod (2).

5. Method for producing a clutch-release bearing device according to Claim 4, **characterized in that** it is provided with a plastically deformable section which can be pressed with plastic deformation into a driver region of the tie rod (2).

6. Method for producing a clutch-release bearing device according to Claim 4, **characterized in that** it is provided, in its axial end region facing away from the annular-shoulder device, with a plastic poly-stop lock ring.

7. Method for producing a clutch-release bearing device according to Claim 4, **characterized in that** a cap element is provided which can be fitted onto the attaching structure and can be brought into engagement with a driver section of the tie rod (2).

8. Method for producing a clutch-release bearing device according to Claim 7, **characterized in that** the driver section of the tie rod is produced by a blind bore which has a non-round, in particular hexagonal, or Torx-profiled cross section and dips into the end side of the tie rod (2), and **in that** the cap element has an insertion journal with a journal cross section which is complementary with respect to the cross section of the blind bore.

9. Method for producing a clutch-release bearing device according to Claim 7, **characterized in that** the driver section of the tie rod is configured as a single or multiple slot of the tie-rod end, and **in that** the cap element has an insertion journal with a journal cross section which is complementary with respect to the cross section of the slot geometry.

10. Method for producing a clutch-release bearing device according to Claim 1, **characterized in that** the attaching structure (1) is secured axially on the tie rod (2) in a positively locking manner.

11. Method for producing a clutch-release bearing device according to Claim 1, **characterized in that** a structure which forms an annular shoulder is provided in the region of an end section, facing away from the supporting-shoulder device (11), of the cylindrical journal section (10), which structure is secured on the cylindrical journal section (10) and supports the inner circumferential-edge region of the disc-spring device (13) in the axial direction in the stressed state, and the clutch-release bearing (3) combines the disc-spring device (13) and the attaching structure (1) to produce a preassembled structural unit.

## Revendications

1. Procédé de fabrication d'un dispositif de palier de débrayage d'embrayage, comprenant :
- un palier de débrayage d'embrayage (3) qui comprend une première bague de roulement de palier à roulement (4), une deuxième bague de roulement de palier à roulement (5), une partie de bague de support (8) sur l'une des bagues de roulement de palier à roulement (4, 5) et une structure de connexion (1),
la structure de connexion (1) comportant un corps annulaire qui comprend une partie de tourillon cylindrique (10), un dispositif d'épaulement d'appui (11) faisant saillie radialement au-delà de la partie de tourillon cylindrique (10) et un alésage fileté intérieur (9) complémentaire d'une partie de tourillon filetée (15) d'une tige de traction (2),
la structure de connexion (1) étant insérée dans la partie de bague de support (8),
une force axiale pouvant être appliquée dans la partie de bague de support (8) par le biais de la structure de connexion, en vue du déplacement axial du palier de débrayage d'embrayage (3),
- la partie de tourillon cylindrique (10) étant configurée, en ce qui concerne son diamètre extérieur, de telle sorte qu'elle traverse axialement la partie de bague de support (8) en laissant un jeu radial, et
- le dispositif d'épaulement d'appui (11) formant une face frontale tournée vers la partie de bague de support (8), et
- un dispositif de ressort Belleville (13) étant prévu, lequel pousse la partie de bague de support (8) contre la face frontale du dispositif d'épaulement d'appui (11),
- un dispositif d'épaulement annulaire (14) étant réalisé dans la région d'une partie d'extrémité de la partie de tourillon cylindrique (10) qui est opposée au dispositif d'épaulement d'appui (11), lequel dispositif d'épaulement annulaire supporte dans la direction axiale la région d'arête périphérique intérieure du dispositif de ressort Belleville (13) à l'état serré, **caractérisé en ce que** le dispositif d'épaulement annulaire (14) est réalisé par déformation plastique d'une région d'extrémité de la partie de tourillon cylindrique (10), l'élargissement de la région d'extrémité de la partie de tourillon cylindrique (10) qui est prévue pour la formation du dispositif d'épaulement annulaire (14) étant effectué après le placement de la partie de bague de support (8) et du ressort Belleville (13), en vue d'obtenir, dans cette mesure, un ensemble prémonté.

2. Procédé de fabrication d'un dispositif de palier de débrayage d'embrayage selon la revendication 1, **caractérisé en ce que** le dispositif d'épaulement annulaire (14) est réalisé d'un seul tenant avec le corps annulaire.

3. Procédé de fabrication d'un dispositif de palier de débrayage d'embrayage selon au moins l'une quelconque des revendications 1 et 2, **caractérisé en ce qu'**un disque d'appui est inséré dans une région située entre le dispositif d'épaulement d'appui (11) et la partie de bague de support (8).

4. Procédé de fabrication d'un dispositif de palier de débrayage d'embrayage selon au moins l'une quelconque des revendications 1 à 3, **caractérisé en ce qu'**un dispositif de fixation est prévu, pour fixer de manière solidaire en rotation la structure de connexion (1) sur la tige de traction (2).

5. Procédé de fabrication d'un dispositif de palier de débrayage d'embrayage selon la revendication 4, **caractérisé en ce que** celui-ci est pourvu d'une partie déformable plastiquement qui peut être pressée, en la déformant plastiquement, dans une région d'entraînement de la tige de traction (2).

6. Procédé de fabrication d'un dispositif de palier de débrayage d'embrayage selon la revendication 4, **caractérisé en ce que** celui-ci est pourvu, dans sa région d'extrémité axiale opposée au dispositif d'épaulement annulaire, d'une bague de fixation en plastique Poly-Stop.

7. Procédé de fabrication d'un dispositif de palier de débrayage d'embrayage selon la revendication 4, **caractérisé en ce qu'**il est prévu un élément de capuchon qui peut être placé sur la structure de connexion et peut être amené en prise avec une partie d'entraînement de la tige de traction (2).

8. Procédé de fabrication d'un dispositif de palier de débrayage d'embrayage selon la revendication 7, **caractérisé en ce que** la partie d'entraînement de la tige de traction est réalisée par un alésage borgne de section transversale non circulaire, en particulier hexagonale ou de profil Torx, et pénétrant dans le côté frontal de la tige de traction (2), et **en ce que** l'élément de capuchon comprend un tourillon d'insertion présentant une section transversale de tourillon complémentaire de la section transversale de l'alésage borgne.

9. Procédé de fabrication d'un dispositif de palier de débrayage d'embrayage selon la revendication 7, **caractérisé en ce que** la partie d'entraînement de la tige de traction est réalisée sous forme de fente unique ou de fentes multiples de l'extrémité de la tige de traction, et **en ce que** l'élément de capuchon comprend un tourillon d'insertion présentant une section transversale de tourillon complémentaire de la section transversale de la géométrie de fente.

10. Procédé de fabrication d'un dispositif de palier de débrayage d'embrayage selon la revendication 1, **caractérisé en ce que** la structure de connexion (1) est fixée axialement par complémentarité de formes sur la tige de traction (2).

11. Procédé de fabrication d'un dispositif de palier de débrayage d'embrayage selon la revendication 1, **caractérisé en ce qu'**une structure formant un épaulement annulaire est prévue dans la région d'une partie d'extrémité de la partie de tourillon cylindrique (10) qui est opposée au dispositif d'épaulement d'appui (11), laquelle structure est fixée sur la partie de tourillon cylindrique (10) et supporte dans la direction axiale la région d'arête périphérique intérieure du dispositif de ressort Belleville (13) à l'état serré, et le palier de débrayage d'embrayage (3) réunit le dispositif de ressort Belleville (13) et la structure de connexion (1) en une unité structurale prémontée.
